# EUROPÄISCHE PATENTSCHRIFT

(11) **EP 2 925 569 B1**
(45) Veröffentlichungstag und Bekanntmachung des Hinweises auf die Patenterteilung: **29.03.2017**
(21) Anmeldenummer: 13798975.2
(22) Anmeldetag: 21.11.2013
(51) Int. Cl.: B60R 21/239

(54) **GASSACKMODUL MIT EINER ADAPTIVEN VENTILATIONSEINRICHTUNG**
AIRBAG MODULE WITH AN ADAPTIVE VENT OPENING
MODULE DE SAC GONFLABLE AVEC UN TROU D'ÉVENT ADAPTIVE

(30) Priorität: 28.11.2012 DE 102012023226
(43) Veröffentlichungstag der Anmeldung: 07.10.2015
(73) Patentinhaber: Autoliv Development AB, 447 83 Vårgårda (SE)
(72) Erfinder: WEBER, Marcus, 97531 Untertheres (DE); HOFFMANN, Jens, 63741 Aschaffenburg (DE); NEBEL, Raimund, 86836 Obermeitingen (DE); DRÖSSLER, Wolfgang, 82194 Gröbenzell (DE); PEIZ, Roland, 86567 Hilgertshausen (DE)
(74) Vertreter: Schön, Thilo
(86) Internationale Anmeldenummer: PCT/EP2013/074333
(87) Internationale Veröffentlichungsnummer: WO 2014/082912

(56) Entgegenhaltungen:
- WO-A1-2011/157631
- DE-A1-102008 039 675
- JP-A- H11 321 506

## Beschreibung

Die Erfindung betrifft ein Gassackmodul mit einer adaptiven Ventilationseinrichtung nach dem Oberbegriff des Anspruchs 1.

Nahezu jeder Gassack, insbesondere jeder Frontgassack, weist eine Ventilationseinrichtung auf, durch die Gas aus dem von der Außenhülle des Gassacks umschlossenen Gasraum - im folgenden erster Gasraum - bei Auftreffen der zu schützenden Person entweichen kann, so dass Bewegungsenergie der zu schützenden Person dissipiert wird und die zu schützende Person nicht einfach von der Gassackhülle des Gassackes zurückprallt. Im einfachsten Fall ist eine solche Ventilationseinrichtung schlicht eine Ventilationsöffnung, insbesondere eine Ventilationsöffnung in der Gassackhülle.

Um unterschiedlichen Unfallsituationen und/oder dem Gewicht der zu schützenden Person Rechnung tragen zu können, sind im Stand der Technik auch adaptive Ventilationseinrichtungen bekannt, welche zusätzlich zu der Ventilationsöffnung eine Drosseleinrichtung aufweisen, welche in einem ersten Zustand den Gasfluss durch die Ventilationsöffnung stärker drosselt als in einem zweiten Zustand. In der Regel ist hierbei der erste Zustand der Ausgangszustand und der zweite Zustand der optionale Endzustand. Eine solche Drosseleinrichtung kann in einem einfachen Fall aus einem als Drosselelement dienenden Lappen und aus einer Reißnaht, mittels der der Lappen um die Ventilationsöffnung herum mit der ersten Hülle vernäht ist, bestehen: Übersteigt der Druck im ersten Gasraum einen vorbestimmten Wert, so reißt die Reißnaht und der Lappen gibt die Ventilationsöffnung frei.

Es ist weiterhin bekannt geworden, eine Betätigungseinheiten vorzusehen, welche auf ein äußeres Signal hin, insbesondere auf ein äußeres elektrisches Signal hin, die Drosseleinrichtung von ihrem ersten in ihren zweiten Zustand überführt. Beispielsweise aus der US 6,648,371 B2 ist hierzu eine Betätigungseinheit in Form eines pyrotechnisch arbeitenden Aktuators bekannt geworden. Hierbei ist das erste Ende eines Zugbandes mit dem Drosselelement und das zweite Ende dieses Zugbandes mit einem Bolzen des Aktuators verbunden. Der Aktuator ist hierbei insbesondere am Gehäuseboden des Gassackmodules gehalten. Solange der Aktuator nicht betätigt wird, ist somit das Drosselelement über das Zugband mit dem Gehäuseboden verbunden. Das Zugband kommt bei vollständig expandierter Gassackhülle in einen gespannten Zustand, welcher das Drosselelement in seinem ersten Zustand hält. Wird der Aktuator betätigt, so wird der Bolzen, der das zweite Ende des Zugelementes hält, mittels einer pyrotechnischen Ladung abgesprengt, das Zugelement verliert seine Spannung und das Drosselelement geht in seinen zweiten, nämlich seinen ungedrosselten Zustand über. Diese Technik funktioniert grundsätzlich sehr gut, hat jedoch den Nachteil, dass innerhalb des Gasraumes der Gassachülle Teile, wie beispielsweise der Bolzen, umherfliegen können, und dass innerhalb der Gassackhülle offene Flammen durch die pyrotechnische Ladung auftreten. Weiterhin speist die pyrotechnische Ladung weiteres Gas in den Gasraum der Gassackhülle ein, was nicht immer erwünscht ist.

Aus der US 2006/0071461 A1 ist ein Drosselelement in Form einer sich von einem ersten zu einem zweiten Ende erstreckenden Tülle bekannt. Hierbei ist das erste Ende um die Ventilationsöffnung herum fest mit der Hülle des Gassacks verbunden und das zweite Ende weist einen Tunnel auf, durch den sich ein erstes Ende eines Zugbands erstreckt. Das zweite Ende des Zugbands ist im Ausgangszustand mit einem Aktuator verbunden, beispielsweise mit einem solchen, wie er oben beschrieben wurde. Im Ausgangszustand (im folgenden zumeist als erster Zustand bezeichnet) befindet sich die Tülle innerhalb des von der Hülle des Gassacks umgebenen Gasraums. Wird dieser Gasraum von dem ihm zugeordneten Inflator befüllt, woraufhin sich die Gassackhülle ausdehnt, so kommt das Zugband unter Zugspannung und zieht das zweite Ende der Tülle zu, wodurch die aus Ventilationsöffnung und Tülle gebildete Ventilationseinrichtung gedrosselt wird. Wird nun der Aktuator betätigt, wodurch das zweite Ende des Zugbandes freikommt, so wird die Tülle aufgrund des im ersten Gasraum herrschenden Überdrucks durch die Ventilationsöffnung nach außen gestülpt. Das nicht mehr unter Zuspannung stehende Zugband kann das zweite Ende der Tülle nicht mehr zuhalten, so dass die Ventilationseinrichtung dann in einem ungedrosselten, zweiten Zustand aufweist.

Die gattungsbildende WO2011/157631A1 schlägt ein Gassackmodul mit einer adaptiven Ventilationseinrichtung vor, bei der ein zweiter, kleiner Gassack innerhalb des Gasraumes der eigentlichen Gassackhülle vorgesehen ist und als Teil einer Betätigungseinheit dient. Die Hülle dieses zweiten Gassackes - im folgenden als zweite Hülle bezeichnet - umschließt einen zweiten Gasraum, welcher durch einen Gasgenerator in Form einer Zündpille mit Gas gefüllt werden kann. Geschieht dies, so beeinflusst dies den freien Querschnitt der Ventilationsöffnung. In einer Ausführungsform der WO2011/157631A1 ist die zweite Hülle zumindest abschnittsweise um die Ventilationsöffnung herum mit der ersten Hülle mittels einer Reißnaht vernäht. Das heißt, dass die zweite Hülle im Ausgangszustand die Ventilationsöffnung abdeckt und somit verschließt. Bei Expansion der zweiten Hülle reißt diese Reißnaht und die Ventilationsöffnung wird freigegeben. Die zweite Hülle hat hierbei eine Doppelfunktion: Sie dient einerseits als Teil der Betätigungseinheit und andererseits als Teil der Drosseleinrichtung, nämlich als Drosselelement. Nachteilig am beschriebenen System ist, dass die Reißnaht den Kräften, die auf die als Abdeckelement dienende zweiten Hülle aufgrund des im ersten Gasraum auftreten Innendrucks wirken, standhalten muss, bei den Kräften, welche aufgrund der Befüllung der zweiten Hülle auftreten, jedoch brechen muss. Dies sehr schwierig zu justieren.

Hiervon ausgehend stellt sich die vorliegende Erfindung die Aufgabe, ein gattungsgemäßes Gassackmodul derart weiterzubilden, dass mit einfachen Mitteln zuverlässig sichergestellt werden kann, dass die Reißnaht intakt bleibt, solange die zweite Hülle nicht mit Gas befüllt wird und bricht, wenn die zweite Hülle mit Gas befüllt wird.

Diese Aufgabe wird durch ein Gassackmodul mit den Merkmalen des Anspruchs 1 gelöst.

Erfindungsgemäß ist die Ventilationsöffnung im ersten Zustand unmittelbar, das heißt ohne die zweite Hülle, mittels der Reißnaht gedrosselt, insbesondere geschlossen. Dies wird dadurch erreicht, dass sich die Reißnaht nicht nur durch die beiden Lagen der zweiten Hülle, sondern auch durch zwei Abschnitte des die Ventilationsöffnung umlaufenden Randes erstreckt. Hierdurch wird die Ventialationsöffnung durch die Reißnaht im ersten Zustand zusammengezogen. Die zweite Hülle hat keine Doppelfunktion mehr (als Drosselelement und als Teil der Betätigungseinheit) sondern dient nur noch als Teil der Betätigungseinheit. Hierdurch erhält man sehr viel Gestaltungsfreiheit bei der Ventilationsöffnung und der Reißnaht, welche man, wie man später sehen wird, so nutzen kann, dass die Kräfte, welche aufgrund des Innendrucks im ersten Gasraum auf die Reißnaht wirken, klein sind. Die gewonnene Gestaltungsfreiheit hat jedoch noch weitere Vorteile, insbesondere bei der Ausgestaltung der zweiten Hülle.

In einer ersten bevorzugten Ausführungsform weist die adaptive Ventilationseinrichtung eine sich von einem ersten Ende zu einem zweiten Ende erstreckende Tülle auf, wobei das erste Ende der Tülle um eine Durchtrittsöffnung der ersten Hülle herum mit der ersten Hülle fest verbunden, insbesondere vernäht, ist und wobei das zweite Ende der Tülle die Ventialationsöffnung aufweist, so dass die Tülle die Berandung der Ventilationsöffnung bildet. In dieser Ausführungsform kann die Kraft, die aufgrund des Innendrucks im ersten Gasraum auf die Reißnaht wirkt, praktisch auf null gesenkt werden. Die Tülle kann in ihrem ersten Zustand innerhalb oder außerhalb des ersten Gasraum angeordnet sein.

In einer zweiten bevorzugten Ausführungsform befindet sich die Ventilationsöffnung unmittelbar in der ersten Hülle und die Reißnaht verschließt diese Ventilationsöffnung, indem sie den Rand der Ventialtionsöffnung zusammenzieht. Die Ventilationsöffnung kann hierbei jede beliebige Form aufweisen, insbesondere kann durch einen geraden oder gebogenen Schlitz gebildet werden, oder flächig ausgestaltet sein. Die gewählte Geometrie hat unter anderem Einfluss darauf, wie hoch die Kräfte sind, welche aufgrund des Innendrucks im ersten Gasraum auf die Reißnaht wirken.

Um keinen zusätzlichen Bauraum zu benötigen und um sicherzustellen, dass die zweite Hülle problemlos vollständig expandieren kann, kann die zweite Hülle vollständig innerhalb des von der ersten Gassackhülle umschlossenen Gasraumes angeordnet sein. Es ist jedoch auch möglich, die zweite Hülle vollständig außerhalb des von der ersten Gassackhülle umschlossenen Gasraumes anzuordnen.

Es ist sowohl möglich, die zweite Hülle so auszubilden, dass sie auch nach ihrer Befüllung vollständig geschlossen bleibt, als es auch möglich ist, diese so auszubilden, dass sie sich bei ihrer Befüllung öffnet. Je nach den konkreten Gegebenheiten kann beides Vorteile haben.

Die zweite Hülle kann von der ersten Hülle vollständig separat sein oder sie kann abschnittsweise mit ihr zusammenfallen.

Die Erfindung wird nun anhand bevorzugter Ausführungsformen mit Bezug auf die Figuren näher erläutert. Hierbei zeigen:
- Figur 1: eine erste Ausführungsform eines erfindungsgemäßen Gassackmodules in einer schematisierten Schnittdarstellung im Ruhezustand,
- Figur 2: das in Figur 1 Gezeigte nach Zündung des Gasgenerators und Befüllung des ersten Gasraumes, welcher von der Gassackhülle - hier als erste Hülle bezeichnet - umschlossen ist, wobei sich die Ventilationseinrichtung jedoch noch in einem gedrosselten Zustand befindet,
- Figur 3: das in Figur 2 Gezeigte nach Aktivierung einer Betätigungseinheit, wodurch die Ventilationseinrichtung in einen ungedrosselten Zustand übergegangen ist,
- Figur 4: eine adaptive Ventilationseinrichtung und eine Betätigungseinheit, welche ähnlich zu der in den Figuren 1 bis 3 gezeigten ist, in einem der Figur 2 entsprechenden Zustand,
- Figur 4a: eine schematisierte Draufsicht aus Richtung R1 in Figur 4,
- Figur 4b: das in Figur 4a Gezeigte in einer prspektivischen Darstellung, wobei sich der Betrachtungspunkt innerhalb des ersten Gasraums befindet,
- Figur 5: die adaptive Ventilationseinrichtung und die Betätigungseinheit aus Figur 4 in einem der Figur 3 entsprechenden Zustand,
- Figur 5a: die adaptive Ventilationseinrichtung aus Figur 5 in einer perspektivischen Darstellung, wobei sich der Betrachtungspunkt außerhalb des ersten Gasraums befindet
- Figur 6: eine zweites Ausführungsbeispiel der ersten Ausführungsform in einem der Figur 4 entsprechenden Zustand,
- Figur 7: das in Figur 6 Gezeigte in einem der Figur 5 entsprechenden Zustand,
- Figur 8: eine drittes Ausführungsbeispiel der ersten Ausführungsform in einem der Figur 4 entsprechenden Zustand,
- Figur 9: das in Figur 8 Gezeigte in einem der Figur 5 entsprechenden Zustand,
- Figur 10: eine viertes Ausführungsbeispiel der ersten Ausführungsform in einem der Figur 4 entsprechenden Zustand,
- Figur 11: das in Figur 10 Gezeigte in einem der Figur 5 entsprechenden Zustand,
- Figur 12: eine fünftes Ausführungsbeispiel der ersten Ausführungsform in einem der Figur 4 entsprechenden Zustand,
- Figur 13: das in Figur 12 Gezeigte in einem der Figur 5 entsprechenden Zustand,
- Figur 14: eine sechstes Ausführungsbeispiel der ersten Ausführungsform in einem der Figur 4 entsprechenden Zustand,
- Figur 15: das in Figur 14 Gezeigte in einem der Figur 5 entsprechenden Zustand,
- Figur 16: eine siebtes Ausführungsbeispiel der ersten Ausführungsform in einem der Figur 4 entsprechenden Zustand,
- Figur 17: das in Figur 16 Gezeigte in einem der Figur 5 entsprechenden Zustand,
- Figur 18: eine zweite Ausführungsform der Erfindung in einer der Figur 4 entsprechenden Darstellung,
- Figur 18a: eine schematisierte Draufsicht aus Richtung R2 in Figur 18,
- Figur 18b: das in Figur 18a Gezeigte in einer prspektivischen Darstellung, wobei sich der Betrachtungspunkt innerhalb des ersten Gasraums befindet,
- Figur 19: die adaptive Ventilationseinrichtung und die Betätigungseinheit aus Figur 18 in einem der Figur 5 entsprechenden Zustand,
- Figur 19a: die Ventilationseinrichtung aus Figur 19 in einer perspektivischen Darstellung, wobei sich der Betrachtungspunkt außerhalb des ersten Gasraums befindet,
- Figur 20: ein zweites Ausführungsbeispiel der zweiten Ausführungsform in einer der Figur 18 entsprechenden Darstellung,
- Figur 21: eine alternative geometrische Form der Ventilationsöffnung der zweiten Ausführungsform der Erfindung in einer der Figur 19a entsprechenen Darstellung und
- Figur 22: eine weitere alternative geometrische Form der Ventilationsöffnung der zweiten Ausführungsform der Erfindung in einer der Figur 21 entsprechenen Darstellung.

### Erste Ausführungsform

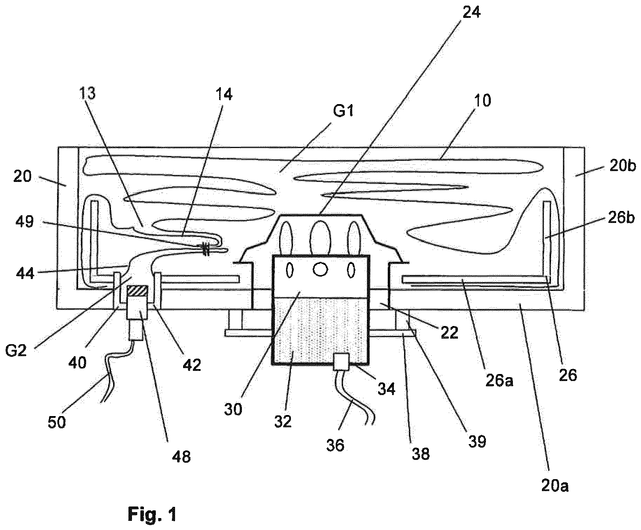

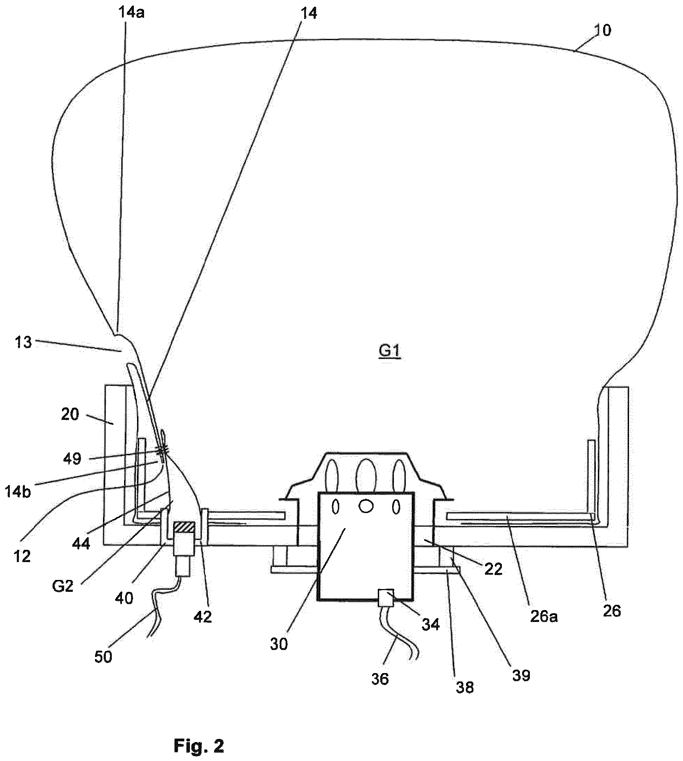

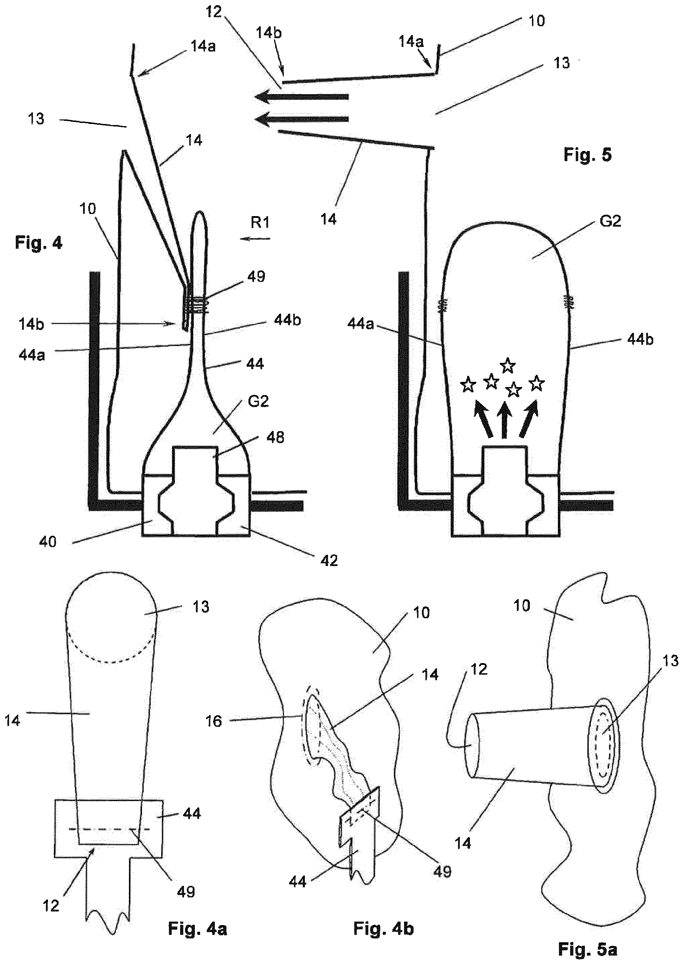

Mit Bezug auf die Figuren 1 bis 5a wird nun eine erste Ausführungsform der Erfindung anhand eines ersten Ausführungsbeispiels im Detail beschrieben. Zwar gibt es zwischen der Version, welche in den Figuren 1 bis 3 gezeigt ist, und der Version, welche in den Figuren 4 und 5 gezeigt ist, Unterschiede hinsichtlich des Gehäuses der Betätigungseinheit, da dies jedoch auf die Funktionsweise und die hier wesentliche Geometrie keinen Einfluss hat, werden beide Versionen als zum ersten Ausführungsbeispiel gehörend betrachtet und es wird auf alle genannten Figuren genommen.

Die Figuren 1 bis 3 zeigen ein Front-Gassackmodul, nämlich ein Fahrer-Gassackmodul zum Einbau in den Nabenbereich eines Lenkrades. Dieses ist grundsätzlich wie üblich aufgebaut: Es weist nämlich ein Gehäuse 20 mit einer Gehäusewand 20b und einem Gehäuseboden 20a auf, in welches im Ruhezustand die hier als erste Hülle 10 bezeichnete Gassackhülle eingefaltet ist. Diese erste Hülle 10 umschließt einen ersten Gasraum G1. Die erste Hülle 10 wird durch ein Halte- und Deflektorelement 26 am Gehäuseboden 20a gehalten, wozu das Halte- und Deflektorelement 26 einen Boden 26a aufweist, von dem sich weiterhin eine umlaufende Seitenwand 26b erstreckt. Zur Befüllung des ersten Gasraumes dient ein erster Inflator, nämlich ein Gasgenerator 30, welcher sich im gezeigten Ausführungsbeispiel durch eine Öffnung 22 im Gehäuseboden 20a und durch eine Durchbrechung im Boden des Halte- und Deflektorelements 26 ins Innere des Gehäuses 20 und somit in den ersten Gasraum G1 erstreckt. Dieser Gasgenerator 30 weist in üblicher Art und Weise eine Treibladung 32 auf, welche durch eine erste Zündkapsel 34 gezündet wird, sobald diese über ein Zündkabel 36 elektrisch gezündet wird. Im oberen Bereich des Gasgenerators 30 befinden sich Austrittsöffnungen für das erzeugte Gas; dieser Bereich des Gasgenerators 30 wird von einem Diffusor 24 überspannt. Die Verbindung zwischen Gasgenerator 30 und Gehäuseboden 20a erfolgt im gezeigten Ausführungsbeispiel über einen Flansch 38 des Gasgenerators und Dämpfer 39.

An der ersten Hülle 10 ist eine adaptive Ventilationseinrichtung vorgesehen, über die der erste Gasraum G1 entlüftet werden kann. Es kann eine zweite, insbesondere eine nicht-adaptive Ventilationseinrichtung, insbesondere in Form eines Loches in der ersten Hülle vorgesehen sein. Dies ist jedoch nicht dargestellt. Die adaptive Ventilationseinrichtung weist eine Durchtrittsöffnung 13 und eine Tülle, deren erstes Ende 14a um die Durchtrittsöffnung 13 herum über eine dauerhafte Verbindungsnaht mit der ersten Hülle 10 verbunden ist, auf. Diese dauerhafte Verbindungsnaht ist jedoch nur in der Figur 4b dargestellt, in der sie das Bezugszeichen 16 trägt. Das zweite Ende der Tülle umschließt die Ventilationsöffnung 12 und bildet deren Berandung.

Die eben beschriebene adaptive Ventilationseinrichtung ist im Ausgangszustand geschlossen oder zumindest gedrosselt und kann auf ein äußeres (in der Regel elektrisches) Signal hin in einen ungedrosselten zweiten Zustand überführt werden. Hierzu dient die Betätigungseinheit 40. Diese weist als wesentliche Elemente eine zweite Hülle 44 und eine zweite Zündkapsel 48 auf. Bei Betätigung der zweiten Zündkapsel 48 - hierzu dient das Zündkabel 50 der zweiten Zündkapsel - wird der von der zweiten Hülle umschlossene zweite Gasraum G2 mit Gas befüllt.

Im in Figur 1 gezeigten Ausführungsbeispiel ist die zweite Zündkapsel 48 in einem zweiten Gehäuse 42 aufgenommen, so dass die Betätigungseinheit 40 "wie ein kleines Airbagmodul" ausgebildet ist. Wie man jedoch später sehen wird, ist das Vorsehen eines "echten" zweiten Gehäuses 42 nicht zwingend. Weiterhin ist es nicht zwingend, dass sich die Gasquelle zur Befüllung des zweiten Gasraumes G2 (dies ist hier die zweite Zündkapsel 48) unmittelbar im zweiten Gasraum G2 befindet. Eine Zuleitung über ein Gasleitelement oder dergleichen wäre ebenso möglich, ist in den Zeichnungen jedoch nicht dargestellt. Im Ausgangszustand der adaptiven Ventilationseinrichtung ist die Tülle 14 über eine Reißnaht 49 mit der zweiten Hülle 44 vernäht, wodurch die ventilationsöffnung 12 ganz oder teilweise verschlossen ist. Durch dieses Vernähen weisen sowohl die zweite Hülle 44 als auch die Tülle 14 zumindest abschnittsweise zwei definierte Lagen auf, wobei die beiden Lagen der zweiten Hülle hier mit 44a und 44b bezeichnet sind und die zwei Lagen der Tülle 14 zwei Abschnitte der Berandung der Ventilationsöffnung 12 bilden. Im gezeigten Zustand erstreckt sich somit die Tülle 14 von einem ersten Ende 14a, also im Wesentlichen von der Durchtrittsöffnung 13, in Richtung der zweiten Hülle 44, wobei die Vernähung mittels der zweiten Reißnaht 49 vorzugsweise in der Nähe des zweiten Endes 14b der Tülle 14 erfolgt. Erstreckt sich die Reißnaht 49 über die gesamte Breite der Tülle 12, so ist die adaptive Ventilationseinrichtung vollständig geschlossen, d. h. es liegt eine hundertprozentige Drosselung vor.

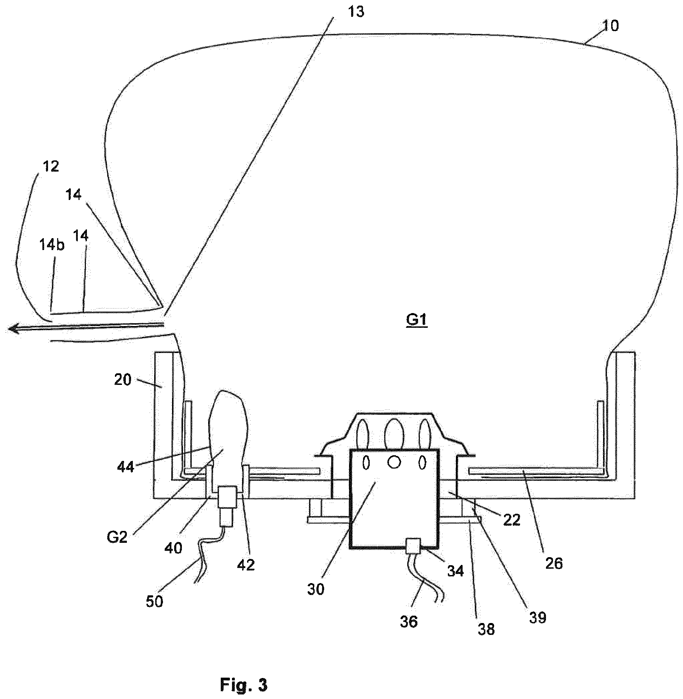

Wird nun die zweite Zündkapsel 48 über ihr Zündkabel 50 betätigt, so füllt diese den zweiten Gasraum G2 mit Gas, so dass durch den herrschenden Gasdruck die beiden Lagen 44a, 44b der zweiten Hülle 44 voneinander weg gedrückt werden, was zu einem Reißen der Reißnaht 49 führt. Durch dieses Reißen der Reißnaht 49 wird sowohl das zweite Ende 14b der Tülle 14 von der zweiten Hülle 44 freigegeben, als auch die Verbindung der beiden Lagen der Tülle 14 geöffnet. Wird der erste Gasraum G1 nach der eben beschriebenen Freigabe des zweiten Endes 14b der Tülle 14 mit Gas befüllt oder ist er bei Freigabe des zweiten Endes 14b der Tülle 14 bereits mit Gas befüllt (wie dies in den Figur 3 und 4 der Fall ist), so stülpt sich die Tülle 14 auf Grund des im ersten Gasraum G1 herrschenden Überdrucks durch die Durchtrittsöffnung 13 nach außen und Gas kann aus dem ersten Gasraum G1 durch die Durchtrittsöffnung 13 über die Tülle 14 durch die Ventilationsöffnung 12 nach außen abströmen.

Die Figuren 4 bis 5a zeigen nochmals das eben gezeigte Ausführungsbeispiel, jedoch in Detailansichten. Das zweite Gehäuse 42 ist hier etwas anders ausgebildet als in der Version der Figuren 1 bis 3, es nimmt hier nämlich lediglich einen Teil der zweiten Zündkapsel 48 auf.

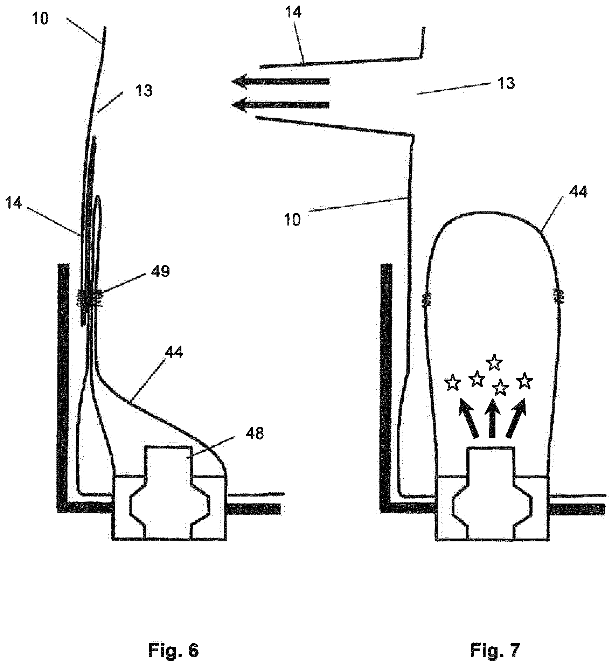

Im eben beschriebenen ersten Ausführungsbeispiel befinden sich in einem ersten Zustand (Ausgangszustand) sowohl die Tülle 14 als auch die zweite Hülle 44 innerhalb des ersten Gasraums G1. Dies ist jedoch nicht zwingend, wie man das den in den Figuren 6 bis 11 gezeigten Ausführungsbeispielen entnimmt. Im zweiten Ausführungsbeispiel der Figuren 6 und 7 befindet sich die zweite Hülle 44 innerhalb des ersten Gasraums G1, die Tülle 14 jedoch in jedem Zustand außerhalb. Die Vernähung von Tülle 14 und zweiter Hülle 44 mittels der Reißnaht 49 erfolgt hier durch die erste Hülle 10 hindurch. Das Anordnen der Tülle 14 außerhalb der ersten Hülle 10 hat den Vorteil, dass sich die Tülle 14 nach ihrer Freigabe nicht erst durch die Ventilationsöffnung 12 hindurchstülpen muss. Somit wird die adaptive Ventilationseinrichtung sehr schnell. Es muss jedoch sichergestellt sein, dass die Reißnaht 49 dem maximalen Gasdruck im ersten Gasraum G1 standhält, da sie mit diesem Druck beaufschlagt werden kann.

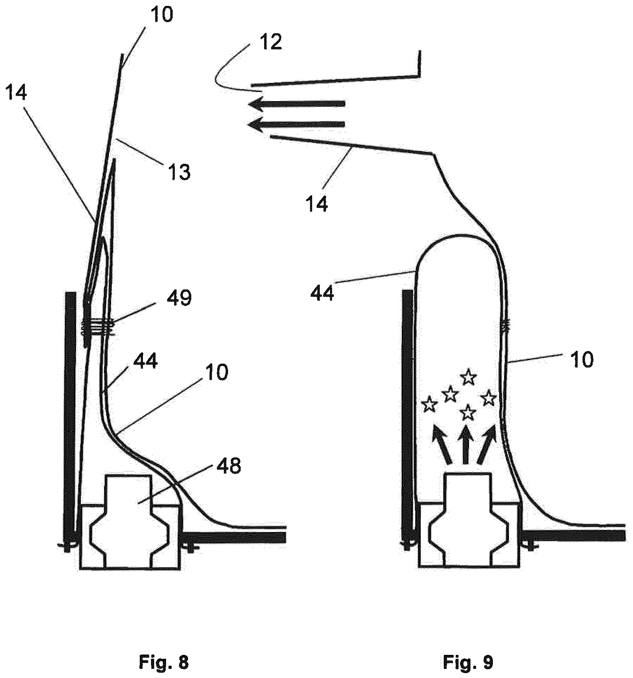

Wie man dem dritten Ausführungsbeispiel der Figuren 8 und 9 entnimmt, ist es auch möglich, sowohl die Tülle 14 als auch die zweite Hülle 44 außerhalb des ersten Gasraumes G1 anzuordnen. Hierbei kann sich die Reißnaht 49 außer durch die Lagen der Tülle 14 und die Lagen der zweiten Hülle 44 auch durch die erste Hülle 10 erstrecken, um Tülle 14 und zweite Hülle 44 an der ersten Hülle 10 zu fixieren. Dies ist für die Funktionsweise der adaptiven Ventilationseinrichtung jedoch nicht zwingend.

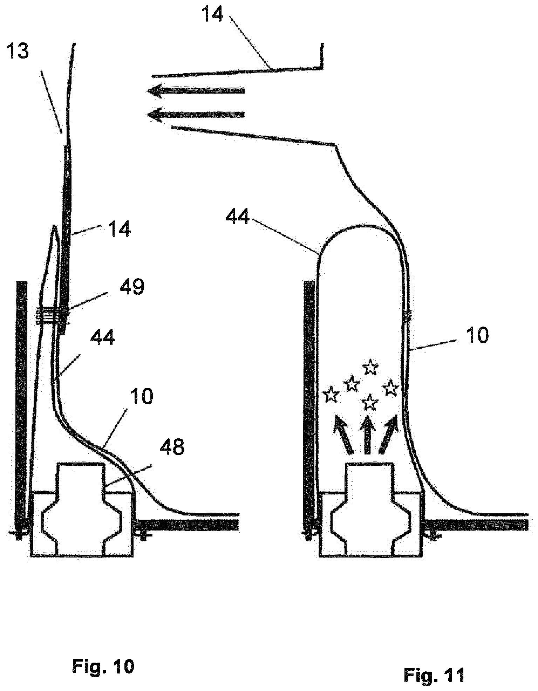

Gewissermaßen in Umkehrung des zweiten Ausführungsbeispiels ist es auch möglich, dass sich die Tülle 14 im Ausgangszustand innerhalb des ersten Gasraums G1 befindet, die zweite Hülle 44 jedoch außerhalb. Dies ist in den Figuren 10 und 11 gezeigt.

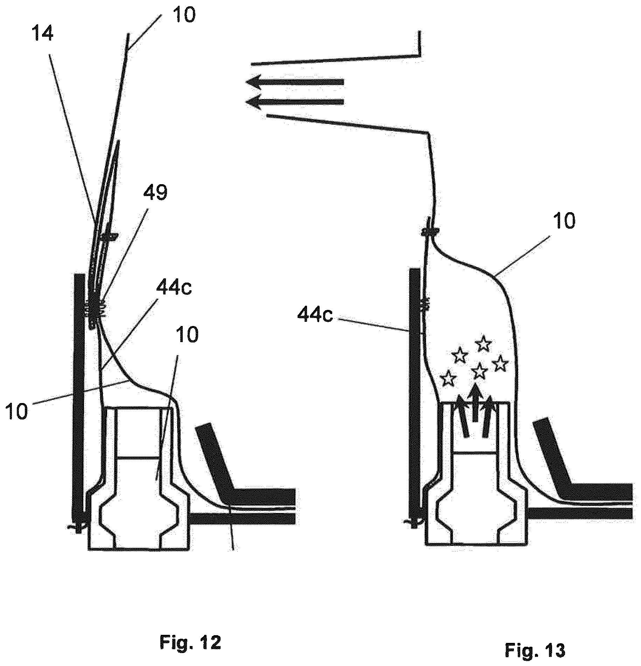

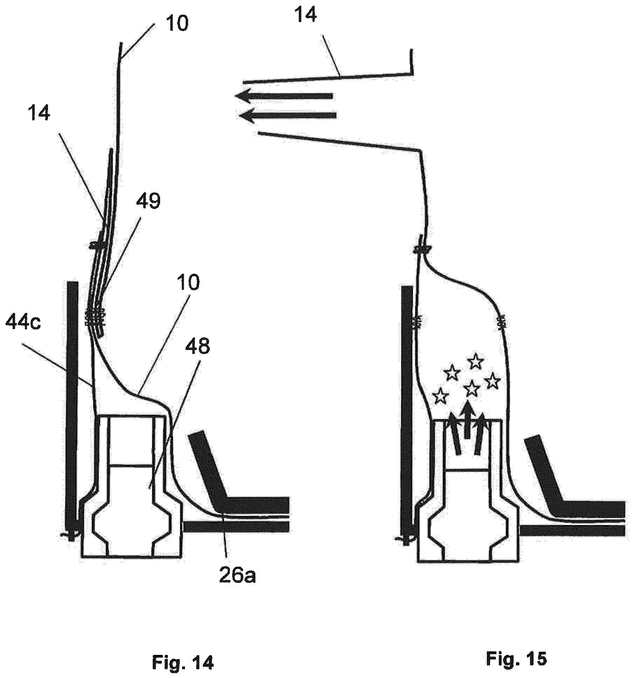

Bei den bisher gezeigten Ausführungsbeispielen sind erste Hülle 10 und zweite Hülle 44 vollständig voneinander getrennt. Dies ist, wie man dem in den Figuren 12 und 13 gezeigten fünften Ausführungsbeispiel entnimmt, jedoch nicht zwingend. Es ist nämlich möglich, dass erste Hülle 10 und zweite Hülle 44 abschnittsweise zusammenfallen, d. h. dass ein Abschnitt der ersten Hülle 10 auch einen Abschnitt der zweiten Hülle 44 bildet. Das bedeutet, dass zusätzlich zur ersten Hülle 10 lediglich eine weitere Lage der zweiten Hülle vorhanden ist, diese weitere Lage ist mit dem Bezugszeichen 44c versehen. Wie dies in den Figuren 12 und 13 gezeigt ist, kann sich diese weitere Lage auf der Außenseite der ersten Hülle 10 befinden, oder auch auf der Innenseite, dies ist jedoch in den Figuren nicht dargestellt. Auch in den Ausführungsbeispielen, in denen erste Hülle 10 und zweite Hülle 44 abschnittsweise zusammenfallen, ist es sowohl möglich, die Tülle 14 im ersten Zustand außerhalb des ersten Gasraums anzuordnen (Figuren 12 und 13) als auch innerhalb (Figuren 14 und 15).

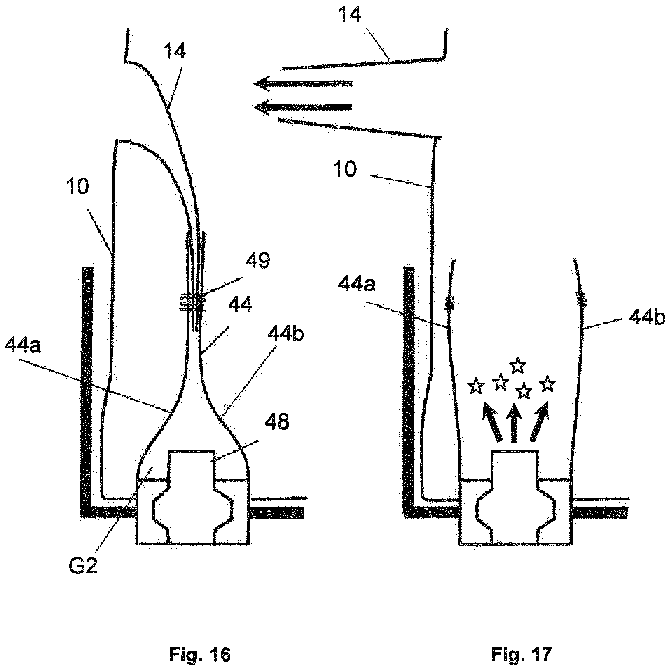

In den bisher gezeigten Ausführungsbeispielen bleibt die zweite Hülle 44 nach Zündung der zweiten Zündkapsel 48 geschlossen, so dass kein Gas der zweiten Zündkapsel in den ersten Gasraum G1 oder nach Außen gelangt. Dies kann Vorteile haben, ist jedoch nicht zwingend, wie dies im siebten Ausführungsbeispiel der Figuren 16 und 17 dargestellt ist. Insbesondere ist es möglich, dass die zweite Hülle 44 aus zwei getrennten Lagen besteht, welche in dem Ausgangszustand über die Reißnaht 49 miteinander verbunden sind. Bei Zerreißen der Reißnaht 49 öffnet sich dann auch der zweite Gasraum, wie dies in Figur 17 gezeigt ist. In dieser Ausführungsform ist es auch möglich, dass die Tülle 14 im Ausgangszustand zwischen den beiden Lagen 14a, 14b der zweiten Hülle liegt. Auch bei einer sich öffnenden zweiten Hülle ist es natürlich möglich, dass sich diese außerhalb des ersten Gasraumes G1 befindet, genauso wie es möglich ist, dass erste und zweite Hülle abschnittsweise zusammenfallen. Es sind jedoch nicht sämtliche denkbaren Varianten durch Figuren dargestellt.

Welche der zahlreichen Varianten im konkreten Anwendungsfall eingesetzt wird, hängt von einer Vielzahl von Faktoren, insbesondere von den geometrischen Verhältnissen (auch denen des ersten Gehäuses), den notwendigen Reaktionszeiten usw. ab. Man kann somit nicht generell von einer besten oder im Allgemeinen bevorzugten Ausführungsform sprechen.

### Zweite Ausführungsform

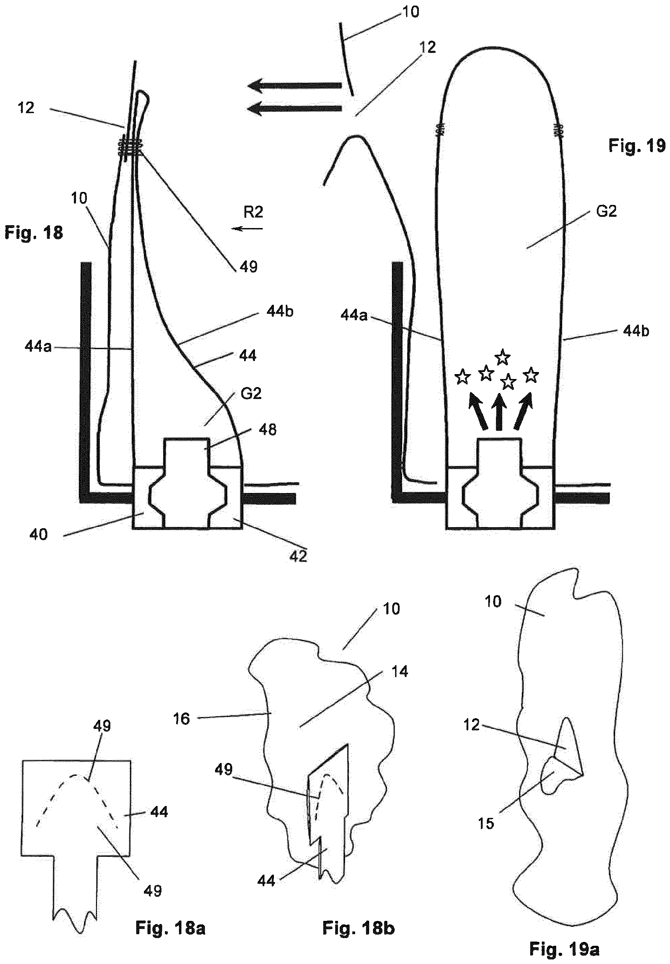

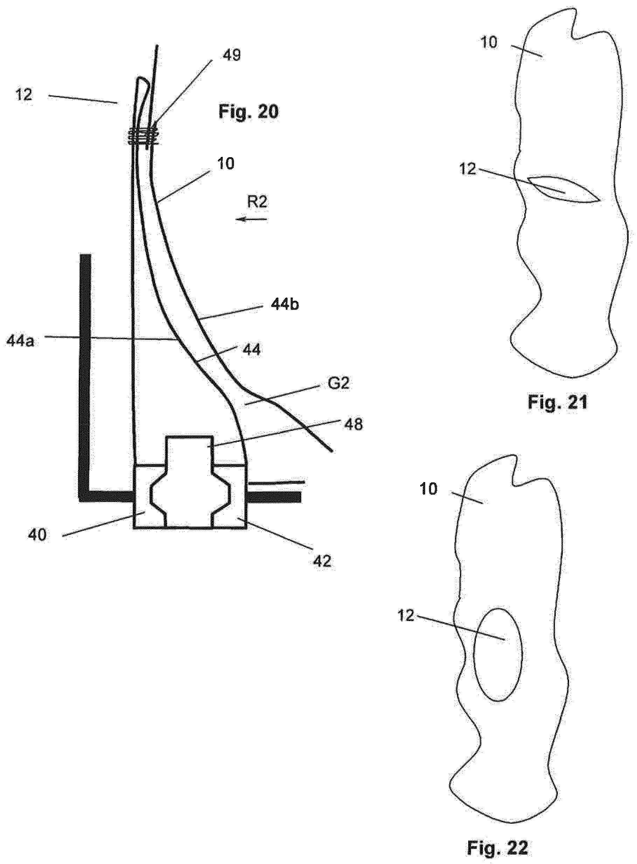

Mit Bezug auf die Figuren 18 bis 22 wird nun noch eine zweite Ausführungsform der Erfindung beschrieben, wobei die Figuren 18 bis 19a ein erstes Ausführungsbeispiel der zweiten Ausführungsform, die Figur 20 ein zweites Ausführungsbeispiel und die Figuren 21 und 22 alternative geometrische Formen der Ventilationsöffnung zeigen.

Die zweite Ausführungsform der Erfindung weist keine Tülle auf, hier befindet sich die Ventilationsöffnung 12 direkt in der ersten Hülle 10. Da die Reißnaht 49 natürlich auch hier die Ventilationsöffnung 12 zumindest teilweise verschließt, d. h. einen ersten Abschnitt der Berandung der Ventilationsöffnung unmittelbar mit einem zweiten Abschnitt der Berandung der Ventilationsöffnung verbindet, wird hierdurch die erste Hülle abschnittsweise etwas zusammengezogen, da die Berandung der Ventilationsöffnung ja zur ersten Hülle 10 gehört. Die Reißnaht erstreckt sich somit durch zwei Lagen der ersten Hülle 10 und zwei Lagen der zweiten Hülle 44.

Im ersten Ausführungsbeispiel der zweiten Ausführungsform, wie es in den Figuren 18 bis 19a dargestellt ist, ist die Ventilationsöffnung schlitzförmig ausgestaltet, wobei der Schlitz eine U- oder V-Form hat, wie man dies insbesondere den Figuren 18a und 18b entnehmen kann. Hierdurch wird ein Lappen 15 gebildet, welcher bei Zerreißen der Reißnaht 49 auf Grund des im ersten Gasraum G1 herrschenden Innendrucks herausgeklappt wird, wie dies der Figur 19a zu entnehmen ist. Im ersten Ausführungsbeispiel befindet sich die zweite Hülle 44 innerhalb des ersten Gasraumes G1, jedoch ist es auch bei der zweiten Ausführungsform möglich, die zweite Hülle 44 außerhalb des ersten Gasraums G1 anzuordnen, wie dies im in Figur 20 gezeigten zweiten Ausführungsbeispiel der zweiten Ausführungsform gezeigt ist. Dies hat insbesondere den Vorteil, dass ein versehentliches Abdecken der Ventilationsöffnung 12 nach Expansion der zweiten Hülle 44 ausgeschlossen ist.

Auch in der zweiten Ausführungsform wäre es möglich, dass erste Hülle und zweite Hülle abschnittsweise zusammenfallen, entsprechend der in den Figuren 12 bis 15 gezeigten Ausführungsbeispielen der ersten Ausführungsform. Eine sich bei Betätigung der zweiten Zündkapsel 48 öffnende zweite Hülle ist ebenso möglich.

Die Figuren 21 und 22 zeigen alternative Ausgestaltungen der Ventilationsöffnung 12, welche insbesondere als gerader Schlitz oder flächig, insbesondere kreisförmig, ausgestaltet sein kann.

Die Kräfte, welche bei befülltem erstem Gasraum G1 auf die Reißnaht 49 wirken, hängen stark von der geometrischen Ausgestaltung der Ventilationsöffnung 12 ab, wobei die Kräfte im allgemeinen dann am kleinsten sind, wenn die Ventilationsöffnung 12 als gerader Schlitz ausgeführt ist.

Vorteil der zweiten Ausführungsform gegenüber der ersten Ausführungsform ist insbesondere der geringere Material- und Fertigungsaufwand (man benötigt keine Tülle), die erste Ausführungsform hat jedoch im allgemeinen den Vorteil, dass sie noch größere Gestaltungsmöglichkeiten bietet und dass es leicht möglich ist, die Kräfte, welche bei befülltem erstem Gasraum G1 auf die Reißnaht 49 wirken, auf nahezu Null zu senken.

### Bezugszeichenliste

- 10: erste Hülle
- 12: Ventilationsöffnung
- 13: Durchtrittsöffnung
- 14: Tülle
- 14a: erstes Ende
- 14b: zweites Ende
- 15: Lappen
- 16: Verbindungsnaht
- 20: Gehäuse
- 20a: Gehäuseboden
- 20b: Gehäusewand
- 22: Öffnung
- 23: Durchbrechung
- 24: Diffusor
- 26: Halte- und Deflektorelement
- 26a: Boden
- 26b: Seitenwand
- 30: Gasgenerator
- 32: Treibladung
- 34: erste Zündkapsel
- 36: Zündkabel des Gasgenerators
- 38: Flansch
- 39: Dämpfer
- 40: Betätigungseinheit
- 42: zweites Gehäuse
- 43: Hohlraum
- 44: zweite Hülle
- 44a,b,c: Lagen der zweiten Hülle
- 48: zweite Zündkapsel
- 49: Reißnaht
- 50: Zündkabel der zweiten Zündkapsel
- G1: erster Gasraum
- G2: zweiter Gasraum

## Patentansprüche

1. Gassack-Modul mit
einer einen ersten Gasraum (G1) umschließenden ersten Hülle (10), einem ersten Inflator zur Befüllung des ersten Gasraums (G1), wenigstens einer adaptiven Ventilationseinrichtung zur Ventilation des ersten Gasraumes (G1), welche wenigstens eine von flexiblem Material berandete Ventilationsöffnung (12) und wenigstens eine Drosseleinrichtung aufweist, welche in einem ersten Zustand den Gasfluss durch die Ventilationsöffnung (12) stärker drosselt als in einem zweiten Zustand, wobei die Drosseleinrichtung eine Reißnaht (49) umfasst,
einer einen zweiten Gasraum (G2) umschließenden zweiten Hülle (44) und einer Gasquelle zur Befüllung des zweiten Gasraums (G2), wobei sich die Reißnaht (49) durch den zweiten Gasraum (G2) erstreckt und bei Befüllung des zweiten Gasraums (G2) durch die Gasquelle reißt, so dass die adaptive Ventilationseinrichtung von einem ersten, gedrosselten Zustand in einen zweiten, weniger gedrosselten Zustand übergeht,
**dadurch gekennzeichnet,**
**dass** die Reißnaht (49) die Ventilationsöffnung (12) im ersten Zustand der adaptiven Ventilationseinrichtung dadurch zumindest drosselt, dass sie einen ersten Abschnitt der Berandung der Ventialtionsöffnung (12) unmittelbar mit einem zweiten Abschnitt der Berandung der Ventilationsöffnung (12) verbindet und somit die Berandung zumindest abschnittsweise zusammenzieht.

2. Gassackmodul nach Anspruch 1, **dadurch gekennzeichnet, dass** die Ventilationseinrichtung eine sich von einem ersten Ende zu einem zweiten Ende erstreckende Tülle (14) aufweist, wobei das erste Ende der Tülle (14) um eine Durchtrittsöffnung der ersten Hülle (10) herum mit der ersten Hülle (10) fest verbunden, insbesondere vernäht, ist und wobei das zweite Ende der Tülle (14) die Ventialationsöffnung (12) aufweist, so dass die Tülle die Berandung der Ventilationsöffnung bildet.

3. Gassack-Modul nach Anspruch 2, **dadurch gekennzeichnet, dass** sich die Tülle (14) im ersten Zustand innerhalb des ersten Gasraums (G1) befindet.

4. Gassack-Modul nach Anspruch 2, **dadurch gekennzeichnet, dass** sich die Tülle (14) im ersten Zustand außerhalb des ersten Gasraums (G1) befindet.

5. Gassack-Modul nach Anspruch 1, **dadurch gekennzeichnet, dass** die Ventilationsöffnung (12) eine Öffnung in der ersten Hülle (10) ist, so dass die Berandung der Ventilationsöffnung (12) zur ersten Hülle (10) gehört.

6. Gassackmodul nach Anspruch 5, **dadurch gekennzeichnet, dass** die Ventilationsöffnung (12) schlitzförmig ausgebildet ist.

7. Gassackmodul nach Anspruch 6, **dadurch gekennzeichnet, dass** die Ventilationsöffnung (12) U-förmig ausgebildet ist.

8. Gassackmodul nach Anspruch 5, **dadurch gekennzeichnet, dass** die Ventilationsöffnung (12) flächig, insbesondere kreisförmig oder oval ausgebildet ist.

9. Gassack-Modul nach einem der vorangehenden Ansprüche, **dadurch gekennzeichnet, dass** die zweite Hülle (44) vollständig innerhalb des ersten Gasraums (G1) angeordnet ist.

10. Gassack-Modul nach einem der Ansprüche 1 bis 8, **dadurch gekennzeichnet, dass** die zweite Hülle (44) vollständig außerhalb des ersten Gasraums (G1) angeordnet ist.

11. Gassack-Modul nach einem der vorangehenden Ansprüche, **dadurch gekennzeichnet, dass** die Gasquelle ein vom ersten Inflator unabhängiger zweiter Inflator ist.

12. Gassack-Modul nach einem der vorangehenden Ansprüche, **dadurch gekennzeichnet, dass** die zweite Hülle (44) auch nach Befüllung des zweiten Gasraums geschlossen bleibt.

13. Gassack-Modul nach einem der Ansprüche 1 bis 11, **dadurch gekennzeichnet, dass** sich die zweite Hülle (44) bei Befüllung des zweiten Gasraums (G2) öffnet.

14. Gassack-Modul nach einem der vorangehenden Ansprüche, **dadurch gekennzeichnet, dass** die Ventilationsöffnung (12) im ersten Zustand vollständig geschlossen ist.

## Claims

1. Airbag module with
a first envelope (10) enclosing a first gas space (G1),
a first inflator for filling the first gas space (G1),
at least one adaptive ventilation device for ventilation of the first gas space (G1), which has at least one ventilation opening (12) bordered by flexible material and at least one throttling device, which throttles the gas flow through the ventilation opening (12) more strongly in a first state than in a second state, wherein the throttling device comprises a tear seam (49),
a second envelope (44) enclosing a second gas space (G2) and a gas source for filling the second gas space (G2), wherein
the tear seam (49) extends through the second gas space (G2) and tears on filling of the second gas space (G2) by the gas source, so that the adaptive ventilation device transfers from a first, throttled state to a second, less throttled state,
**characterised by**
that the tear seam (49) throttles the ventilation opening (12) in the first state of the adaptive ventilation device at least due to the fact that it connects a first section of the border of the ventilation opening (12) directly to a second section of the border of the ventilation opening (12) and thus draws the border together at least in sections.

2. Airbag module according to claim 1, **characterised by** that the ventilation device has a nozzle (14) extending from a first end to a second end, wherein the first end of the nozzle (14) is fixedly connected, in particular sewn, around a through opening of the first envelope (10) to the first envelope (10) and wherein the second end of the nozzle (14) has the ventilation opening (12), so that the nozzle forms the border of the ventilation opening.

3. Airbag module according to claim 2, **characterised by** that the nozzle (14) is located in the first state inside the first gas space (G1).

4. Airbag module according to claim 2, **characterised by** that the nozzle (14) is located in the first state outside the first gas space (G1).

5. Airbag module according to claim 1, **characterised by** that the ventilation opening (12) is an opening in the first envelope (10), so that the border of the ventilation opening (12) belongs to the first envelope (10).

6. Airbag module according to claim 5, **characterised by** that the ventilation opening (12) is formed in the shape of a slot.

7. Airbag module according to claim 6, **characterised by** that the ventilation opening (12) is formed U-shaped.

8. Airbag module according to claim 5, **characterised by** that the ventilation opening (12) is formed flat, in particular circular or oval.

9. Airbag module according to one of the preceding claims, **characterised by** that the second envelope (44) is arranged completely inside the first gas space (G1).

10. Airbag module according to one of claims 1 to 8, **characterised by** that the second envelope (44) is arranged completely outside the first gas space (G1).

11. Airbag module according to one of the preceding claims, **characterised by** that the gas source is a second inflator independent of the first inflator.

12. Airbag module according to one of the preceding claims, **characterised by** that the second envelope (44) remains closed even after filling of the second gas space (G2).

13. Airbag module according to one of claims 1 to 11, **characterised by** that the second envelope (44) opens on filling of the second gas space (G2).

14. Airbag module according to one of the preceding claims, **characterised by** that the ventilation opening (12) is completely closed in the first state.

## Revendications

1. Module de sac gonflable comprenant
une première enveloppe (10) entourant un premier compartiment de gaz (G1),
un premier gonfleur destiné à remplir le premier compartiment de gaz (G1),
au moins un trou d'évent adaptatif destiné à la ventilation du premier compartiment de gaz (G1), qui comporte au moins un orifice d'évent (12) bordé d'un matériau flexible et au moins un dispositif d'étranglement, qui, dans un premier état, étrangle l'écoulement de gaz par l'orifice d'évent (12) de manière plus importante que dans un second état, le dispositif d'étranglement comprenant une couture destinée à la rupture (49),
une seconde enveloppe (44) entourant un second compartiment de gaz (G2) et une source de gaz destinée à remplir le second compartiment de gaz (G2), la couture destinée à la rupture (49) s'étendant à travers le second compartiment de gaz (G2) et se déchirant lors du remplissage du second compartiment de gaz (G2) par la source de gaz de telle sorte que le trou d'évent adaptatif passe d'un premier état étranglé à un second état moins étranglé,
**caractérisé en ce que**
la couture destinée à la rupture (49) étrangle l'orifice d'évent (12) dans le premier état du trou d'évent adaptatif au moins par le fait qu'elle relie une première partie de la bordure de l'orifice d'évent (12) directement à une seconde partie de la bordure de l'orifice d'évent (12) et resserre ainsi la bordure au moins en partie.

2. Module de sac gonflable selon la revendication 1, **caractérisé en ce que** le trou d'évent comporte un bec (14) s'étendant d'une première extrémité à une seconde extrémité, la première extrémité du bec (14) étant reliée fixement, en particulier cousue, à la première enveloppe (10) autour d'un orifice de passage de la première enveloppe (10), et la seconde extrémité du bec (14) comportant l'orifice d'évent (12), de telle sorte que le bec forme la bordure de l'orifice d'évent.

3. Module de sac gonflable selon la revendication 2, **caractérisé en ce que,** dans le premier état, le bec (14) se trouve à l'intérieur du premier compartiment de gaz (G1).

4. Module de sac gonflable selon la revendication 2, **caractérisé en ce que,** dans le premier état, le bec (14) se trouve à l'extérieur du premier compartiment de gaz (G1).

5. Module de sac gonflable selon la revendication 1, **caractérisé en ce que** l'orifice d'évent (12) est un orifice dans la première enveloppe (10), de telle sorte que la bordure de l'orifice d'évent (12) fait partie de la première enveloppe (10).

6. Module de sac gonflable selon la revendication 5, **caractérisé en ce que** l'orifice d'évent (12) est réalisé en forme de fente.

7. Module de sac gonflable selon la revendication 6, **caractérisé en ce que** l'orifice d'évent (12) est réalisé en forme de U.

8. Module de sac gonflable selon la revendication 5, **caractérisé en ce que** l'orifice d'évent (12) est réalisé plan, en particulier circulaire ou ovale.

9. Module de sac gonflable selon l'une des revendications précédentes, **caractérisé en ce que** la seconde enveloppe (44) est disposée entièrement à l'intérieur du premier compartiment de gaz (G1).

10. Module de sac gonflable selon l'une des revendications 1 à 8, **caractérisé en ce que** la seconde enveloppe (44) est disposée entièrement à l'extérieur du premier compartiment de gaz (G1).

11. Module de sac gonflable selon l'une des revendications précédentes, **caractérisé en ce que** la source de gaz est un second gonfleur indépendant du premier gonfleur.

12. Module de sac gonflable selon l'une des revendications précédentes, **caractérisé en ce que** la seconde enveloppe (44) reste fermée même après remplissage du second compartiment de gaz.

13. Module de sac gonflable selon l'une des revendications 1 à 11, **caractérisé en ce que** la seconde enveloppe (44) s'ouvre lors du remplissage du second compartiment de gaz (G2).

14. Module de sac gonflable selon l'une des revendications précédentes, **caractérisé en ce que,** dans le premier état, l'orifice d'évent (12) est entièrement fermé.
